# EUROPEAN PATENT APPLICATION

(11) **EP 0 724 216 A1**
(43) Date of publication of application: **31.07.1996**
(21) Application number: 96100909.9
(22) Date of filing: 23.01.1996
(51) Int. Cl.: G06F 11/00

(54) **Programming support system and programming support method**

(30) Priority: 23.01.1995 JP 8069/95
(71) Applicant: KABUSHIKI KAISHA TOSHIBA, Kawasaki-shi, Kanagawa-ken 210 (JP)
(72) Inventor: Ueki, Katsuhiko,, Minato-ku, Tokyo (JP)
(74) Representative: Zangs, Rainer E., Dipl.-Ing.

(57) **Abstract**

It is an object of this invention to provide a programming support system and a programming support method which allows a program developer to efficiently debug a program on a thread basis. To achieve this object, the sending/receiving means (3) passes a received message to the thread managing module (4) and, at the same time, passes a copy of the message to the first recording module (5). Upon receiving the message, the thread managing module (4) determines which thread will receive the message, passes the message to thread0 and, at the same time, passes the thread ID to the first recording module (5). The first recording module (5) adds the thread ID to the message and sends the message, to which the ID has been added, to the recording object (1) for recording.

## Description

### BACKGROUND OF THE INVENTION

### 1. FIELD OF THE INVENTION

This invention relates to an improved programming system and programming method which support object oriented programming. More specifically, this invention relates to the efficient debugging of a program on a thread basis.

### 2. DESCRIPTION OF THE PRIOR ART

A computer program is a set of complex data processing procedures, meaning that it is virtually impossible for the developer to eliminate all the errors from the program during development or updating. Therefore, to ensure program reliability, the developer must test the developed or updated program to eliminate (debug) errors (bugs).

A programming support system helps the developer in a sequence of programming jobs -- from program designing to debugging. It helps the developer not only in coding and compilation but also in debugging while allowing him to suspend the program at any given point. To let him debug the program efficiently, the programming support system allows him to: (1) display the contents of a location within the program, (2) display program execution information (for example, contents of registers or memory), (3) break (stop) the execution of the program at any given point (breakpoint) in the program, and (4) record debug history data such as developer's instructions or execution information.

Traditionally, a program consists primarily of data processing procedures, and data to be processed is a separate entity which is prepared according to the processing procedure. This type of program, which consists primarily of processing procedures, is called a procedural program. In a procedural program, source code (a program written in a programming language) consists of statements (declarations or instructions), each corresponding to a data processing step in the computer during program execution.

A procedural program described above does not necessarily represent the structure of information in the real world or the natural thought process of human beings. In the real world, each person or organization has its own function, and a sequence of operations is carried out by the mutual interaction among persons and organizations. On the other hand, a procedural program tends to have a special structure where more emphasis is placed on the efficiency of the programming language syntax. This sometimes makes the information structure of a procedure program obscure.

This makes it more and more difficult to create a simply-structured program or to make error-free modification as the program becomes larger and more complex. This problem, which is one factor of what we call a software crisis, requires immediate solution. Recently, to cope with this situation, a software development technique called object-oriented programming has become popular. In object-oriented programming, the real-world things to be processed by software are represented by "objects" which are software entities. And, information on those real-world things and the processing procedures for the information are defined as data (properties) on the objects and processing procedures (method) for the data, respectively.

A program created by this technique is called a object-oriented program. In an object-oriented program, a plurality of objects, each corresponding to a real-world thing, work together to perform data processing on the computer, based on their relation in the real world. As a result, this type of program simulates the behavior of real-world things in the software configuration, making the software simply-structured and easy to maintain. In addition, easy-to-understand modules of a program enhances modularity and reusability.

Object-oriented programs are created in object-oriented programming languages such as Smalltalk or C++. In object-oriented programming, a program is conceptually a collection of objects (each object is called an instance). This object becomes an entry on the computer when the program is executed, and object data is assigned values when it is allocated in a memory area.

Therefore, an object-oriented program, just like other programs, is developed by creating its source code. However, in object-oriented programming, the source code is a collection of classes representing the properties of objects. A "class", a module of a program, represents data on an object and operation to be performed on the data. This "class" is a template on which an object to be created is based. Although a plurality of objects may be created from a class, created objects are independent of each other and the contents of data depend on the object.

In object-oriented programming, an object created as described above transfers messages to send or receive information to or from another object to execute program functions. An object sends a message to another object to ask it to do operation, and the destination object executes a method corresponding to the received message. In general, a method is an internal function constituting the object. Note that the object manager is usually responsible for creating, terminating, and executing an object and for transferring messages.

A programming support system (programming support method) designed for object-oriented programming records the contents of a message transferred between objects as history data (event history). During program debugging, it is possible by checking the recorded message contents to identify an object or method to be corrected. In practice, the function of the programming support system is implemented by a program (hereafter called a configuration program) which performs programming support system functions on the computer. In a typical embodiment of the programming support system, a special object, which is part of the configuration program, is planted into each object of a program to be developed.

This type of special object monitors messages that are transferred to or from the object in which the special object resides. And, upon detecting that a message or some specific message satisfying a specified condition is transferred to or from the object in which the special object resides, it sends message contents and information about the sender or receiver to the recording object prepared specifically for storing them. This transfer is done also via a message. Thus, the messages contents are accumulated in the recording object for later reference by developers.

To utilize the concurrent processing environment such as that of a multi-CPU system, a plurality of objects run concurrently in object-oriented programming as in other concurrent processing environments. And, each object which runs concurrently with other objects is further divided into executable operation units called threads. Each thread is thought of as a unit of scheduling in a processor.

However, in a conventional programming support system, information on the message record senders and receivers is recorded for each object; therefore, it is impossible to identify a thread which sends or receives a message. This makes it difficult to debug an object on a thread basis. For example, the system cannot trace operations or messages associated with a specific thread.

This invention seeks to solve the problems associated with a prior art described above. It is an object of this invention to provide a programming support system and a programming support method which allows a program developer to efficiently debug a program on a thread basis. It is also another object of this invention to provide a simply-structured programming support system and programming support method.

### SUMMARY OF THE INVENTION

To achieve the object, the invention of claim 1 is a programming support system for supporting the development of an object-oriented program containing one or more objects in which messages are transferred and each of which may have one or more threads, the said programming support system comprising: a first recording means for recording each message and information on the objects associated with message transfer and, if there is a thread in at least one of the objects associated with message transfer, information on the thread.

The invention of claim 9 realizes the invention of claim 1 by the methodological standpoint and is a programming support method for supporting the development of an object-oriented program containing one or more objects in which messages are transferred and each of which may have one or ore threads, the said programming support method comprising: a first recording step for recording each message and information on the objects associated with message transfer and, if there is a thread in at least one of the objects associated with message transfer, information on the thread.

The invention of claim 17 realize the invention of claim 1 and 9 by the further different standpoint and is a medium on which a program is recorded and the program expresses: a programming support method for supporting the development of an object-oriented program containing one or more objects in which messages are transferred and each of which may have one or more threads, the said programming support method comprising: a first recording step for recording each message and information on the objects associated with message transfer and, if there is a thread in at least one of the objects associated with message transfer, information on the thread.

According to the inventions as claimed in claims 1,9 and 17, when an object which transfers a message contains threads, information not only on the object but also on the threads is recorded for efficient debugging on a thread basis.

The invention of claim 2 is a programming support system as claimed in claim 1, wherein said first recording means is an object or a part of an object.

The invention of claim 10 realizes the invention of claim 2 by the methodological standpoint and is a programming support method as claimed in claim 9, wherein said first recording step uses an object or a part of an object.

According to the inventions as claimed in claims 2 and 10, the first recording means (first recording step) and an object-oriented program to be debugged (hereafter called "debugged program") share an object or part of an object. Because the debugged program and the first recording means (first recording step) share the same structure, the configuration is simple.

The object of first recording means (first recording step) and the object of the debugged program may be two different objects, depending upon the description of the class, or the object of the first recording means (first recording step) may be a member object of the debugged program. According to the inventions as claimed in claims 2 and 10, the first recording means (first recording step) may be implemented flexibly according to the condition.

The invention of claim 3 is a programming support system as claimed in claim 2, wherein said first recording means comprising: a recording module for determining the contents to be recorded; and a recording object for sequentially storing the determined contents, said recording module, provided for each of one or more objects contained in said object-oriented program, sequentially sending said determined contents to said recording object.

The invention of claim 11 realizes the invention of claim 3 by the methodological standpoint and is a programming support method as claimed in claim 10, wherein said first recording step using: a recording module for determining the contents to be recorded; and a recording object for sequentially storing the determined contents, said recording module, provided for each of one or more objects contained in said object-oriented program, sequentially sending said determined contents to said recording object.

The invention of claim 18 realize the invention of claim 3 and 11 by the further different standpoint and is a medium as claimed in claim 17, wherein said first recording step comprising: a recording module for determining the contents to be recorded; and a recording object for sequentially storing the determined contents, said recording module, provided for each of one or more objects contained in said object-oriented program, sequentially sending said determined contents to said recording object.

According to the inventions as claimed in claims 3,11 and 18, the recording module contained in the object of the debugged program determines the contents to be recorded, and stores the determined contents into the recording object. This enables information on messages to be collected in the recording object, making information easy to view and process. If the object of the first recording means (first recording step) is a member object of the program object, a special area need not be allocated for the data area and, therefore, memory is better utilized.

The invention of claim 4 is programming support system as claimed in claim 1, wherein, at a message source, said first recording means sends information on both or one of a source object and a thread with a message to a destination and, at a message destination, records information on both or one of the source object and the thread sent with the message and information on both or one of a destination object or a thread with the message.

The invention of claim 12 realizes the invention of claim 4 by the methodological standpoint and is a programming support method as claimed in claim 9, wherein, at a message source, said first recording step sends information on both or one of a source object and a thread with a message to a destination and, at a message destination, records information on both or one of the source object and the thread sent with the message and information on both or one of a destination object or a thread with the message.

According to the inventions as claimed in claims 4 and 12, information on an object and/or thread in a source object is sent with a message to a destination. They are recorded with information on a thread determined at the destination. Thus, the message is written only once, making the programming support system or message configuration simpler. Note that, in this specification, the sentence saying an "object" or "thread" is "sent" or "recorded" means that information identifying the object or thread, such as ID, is "sent" or "recorded."

The invention of claim 5 is a programming support system as claimed in claim 1, wherein said first recording means records information on both or one of a source object and a thread when it is sent and information on both or one of a destination object and a thread when it is received.

The invention of claim 13 realizes the invention of claim 5 by the methodological standpoint and is a programming support method as claimed in claim 9, wherein said first recording step records information on both or one of a source object and a thread when it is sent and information on both or one of a destination object and a thread when it is received.

According to the inventions as claimed in claims 5 and 13, a source object and/or thread is recorded when it is sent. Therefore, there is no need to send information on a source thread with a message if it is not necessary at the destination. This makes the configuration of a message simpler.

The invention of claim 6 is a programming support system as claimed in claim 1, further comprising a first setting means for setting message recording conditions.

The invention of claim 14 realizes the invention of claim 6 by the methodological standpoint and is a programming support method as claimed in claim 9, further comprising a first setting step for setting message recording conditions.

According to the inventions as claimed in claims 6 and 14, a message recording condition may be set freely. For example, information only on a desired object or thread or on a specified type of message may be recorded. This allows a program developer to debug only a desired portion of a program.

The invention of claim 7 is a programming support system as claimed in claim 1, further comprising a second recording means for recording a creation and a termination of a thread in an object.

The invention of claim 15 realizes the invention of claim 7 by the methodological standpoint and is a programming support method as claimed in claim 9, further comprising a second recording step for recording a creation and termination of a thread in an object.

According to the inventions as claimed in claims 7 and 15, creation and termination of threads in an object is recorded. So, a program developer can debug a program more efficiently because he knows when messages and threads were created and terminated.

The invention of claim 8 is a programming support system as claimed in claim 7, further comprising a second setting means for setting thread creation and termination conditions.

The invention of claim 16 realizes the invention of claim 8 by the methodological standpoint and is a programming support method as claimed in claim 15, further comprising a second setting step for setting thread creation and termination conditions.

According to the inventions as claimed in claims 8 and 16, a thread generating and terminating condition may be set freely. For example, information on the creation and termination of only a desired object or thread may be recorded or information on only creation or termination may be recorded. This allows a program developer to debug only a desired portion of a program.

Other and further objects, features and advantages of the invention will appear more fully from the following description.

### BRIEF DESCRIPTION OF THE DRAWINGS

Figure 1 is a diagram showing the objects that are present in the memory space when the programming support system used in the embodiment of this invention and a debugged program are running.
Figure 2 is a block diagram showing how the object game in Figure 1 is configured.
Figure 3 is a diagram showing an example of class description representing a method for user1 used in the embodiment of this invention.
Figure 4 is a flowchart showing the procedure for processing in an object that is performed when a message is received in the embodiment of this invention.
Figure 5 is an example of records used in the embodiment of this invention.
Figure 6 is an example of class description representing a method for game used in the embodiment of this invention.
Figure 7 is an example of class description representing a method for dice used in the embodiment of this invention.
Figure 8 is an example of records used in the embodiment of this invention when messages are limited to those transferred to or from thread1 in game.
Figure 9 is an example of records used in the embodiment of this invention when messages are limited to those transferred to or from the object dice.

### SYMBOLS

1 Recording object
2 Setting means object
3 Sending/receiving means
4 Thread managing module
5 First recording module
6 Second recording module
STEP Procedure step

### DETAILED DESCRIPTION

Referring to the attached drawings, there is shown a preferred embodiment of the present invention.

### (1) Structure

This embodiment shows a programming support system, and a programming support method that is executed on this programming support system. It corresponds to claims 1 to 4, 6 to 12, and 14 to 16. It is an object of this embodiment to provide a programming support system and a programming support method which allows a program developer to efficiently debug a program on a thread basis. It is also another object of this embodiment to provide a simply-structured programming support system and programming support method.

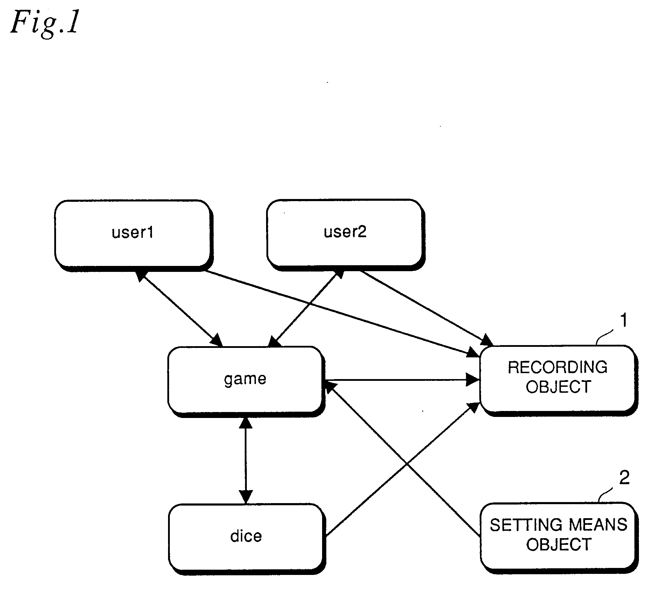

In this embodiment, the system supports an object-oriented program (program to be developed) which contains four objects. Figure 1 shows the objects which reside in the memory space when the program to be developed and the programming support system of this embodiment are running.

The program to be developed in this embodiment is the program of pachisi, with the object "game" (hereafter called "game") being the main routine containing the game rules and algorithm. The object "dice" (hereafter called "dice") performs the function of a dice used for the game.

When this object receives a message, it returns a value representing a spot on the dice as a message. The objects "user1" and "user2" (hereafter called "user1" and "user2") are the user interfaces for users. The recording object and the setting means object are included in the configuration software (claims 2 and 10).

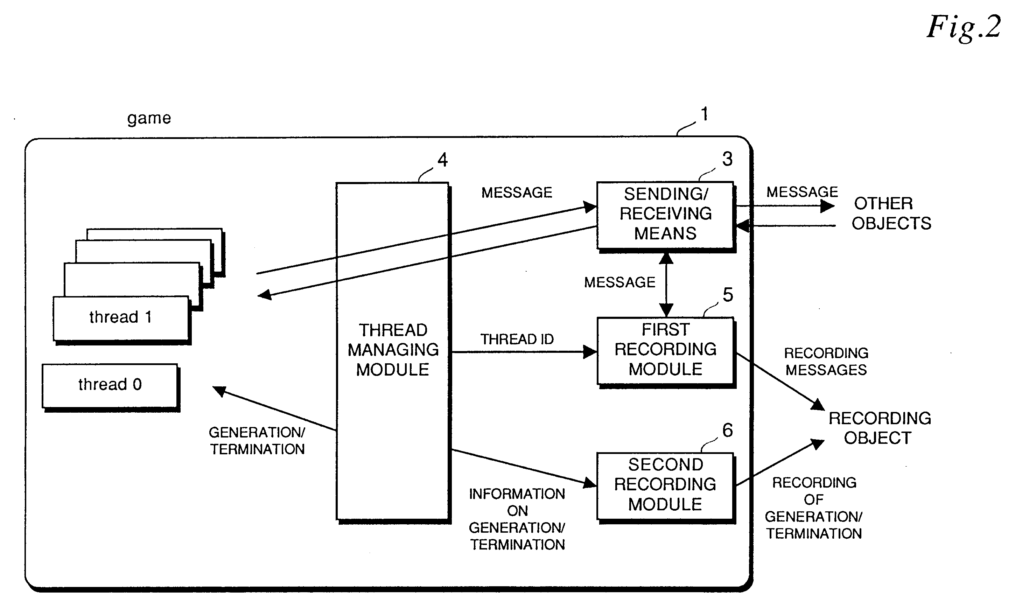

Figure 2 is a functional block diagram showing the configuration of game which is an object shown in Figure 1. As shown in this figure, the object game has the sending/receiving means 3 which sends or receives messages to or from other objects and the thread managing module 4 which creates one or more threads and manages them during operation. The object game is able to run the pachisi game for a plurality of independent users concurrently. Assume that one game corresponds to one user and that one user represents a plurality of participants who join the same game. The thread managing module 4 creates a thread (thread 0) which accepts a game start request message and, each time a new user starts the game, a thread (thread1 to n) which controls the game of a new user.

Game has the first recording module 5 which determines the contents to be recorded. The first recording module 5 sequentially sends the determined contents to the recording object 1 (shown in Figure 1) (claims 3 and 11). The determined contents may be sent by the sending/receiving means 3 of the object game, or the first recording module 5 may have its own sending means. Note that the first recording module 5 and the recording object 1 constitute a second recording means which records each message as well as the objects associated with message transfer (objects and thread when there are threads) (claims 1, 2, 9, and 10). The first recording module is included in each object of the program to be developed.

Game has the second recording module 6 which records the creation and termination of threads in this object. The second recording module sends information on thread creation and termination to the recording object 1 (claims 7, 15). The second recording module 6 and the recording object 1 constitute the second recording means.

The programming support system used in this embodiment has the setting means object 2 (corresponding to the first setting means and the second setting means) which sets a condition for recording the creation and termination of messages and threads. Though not included in the figure, this embodiment has an object manager which creates, manages, and terminates objects and transfers messages.

### (2) Operation and effect of the embodiment

This embodiment with the above configuration performs the operation as follows. First, the program developer uses the setting means object 2 to set the following as a recording condition:
[messages to be sent or received by game]
and
[creation and termination of threads in game]
A condition setting may be defined freely. For example, "messages to be sent or received by game" are those messages that are transferred among the objects (game, dice, user1, and user2) of the program to be developed; in this case, messages transferred among a plurality of members within any of these objects are not recorded. If "messages to be sent or received by dice" is set, the messages transferred between dice and game are recorded. In addition, to check the object operation by tracing the operation of only thread 0, messages sent or received for only thread 0 may be recorded.

A condition may be set in any way. For example, a condition setting is sent to the first or second recording module beforehand and, upon detecting the creation or termination of a message or thread, the recording module checks to see if the message or thread meets the condition setting. If it does, the module records it.

When a message is transferred between objects as described above, the message and information on the source object and/or thread (e.g., information which identify it) are sent from the message source and, at the message destination, the message and information on the source object and/or thread as well as information on the destination object and/or thread are recorded (claims 4, 12).

In an object containing threads (e.g., game), the thread managing module 4 sends a message to be sent by a thread to the sending/receiving means 3, and sends a received message to the corresponding thread. And, when a message is sent, the first recording module 5 adds to the message the ID of the thread which issues the message and, when a message is received, records the ID of the thread which receives the message. The thread managing module 4 determines a thread which will send or receive a message, and sends information about it to the first recording module 5. Note that a thread ID added to a message is not necessary for a program to be developed. So, it may be recorded in a special area specifically reserved for it or may be removed before the message is passed to the destination object.

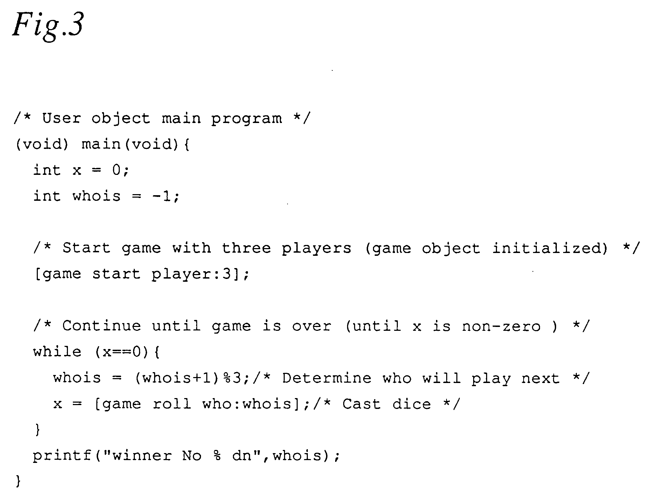

The following shows an example of how messages are recorded in this embodiment (Figures 1 and 2). For example, when an operation to start the game is performed on user1, user1 sends a message to game to start the game. Figure 3 is an example of a class description showing the method for user1.

A message consists of the source object (thread) name, destination object (thread) name, the type of request to be sent to the destination object, argument, and return value. A null character is specified for an unnecessary area. When the game is started, the message is as shown below: this message means that "user1" sends a game "start" request to "game" with "3" players specified for the argument "player:" and "-" specified for the return value.
user1 game start player:3 -
When there are threads in the source object, the ID of the source thread is added to the message. However, in a message sent from an object having no thread, the thread field is left blank. When the destination object has threads, the source object does not know which thread will receive the message (principle of information hiding). Therefore, the destination thread field is left blank when the message is sent.

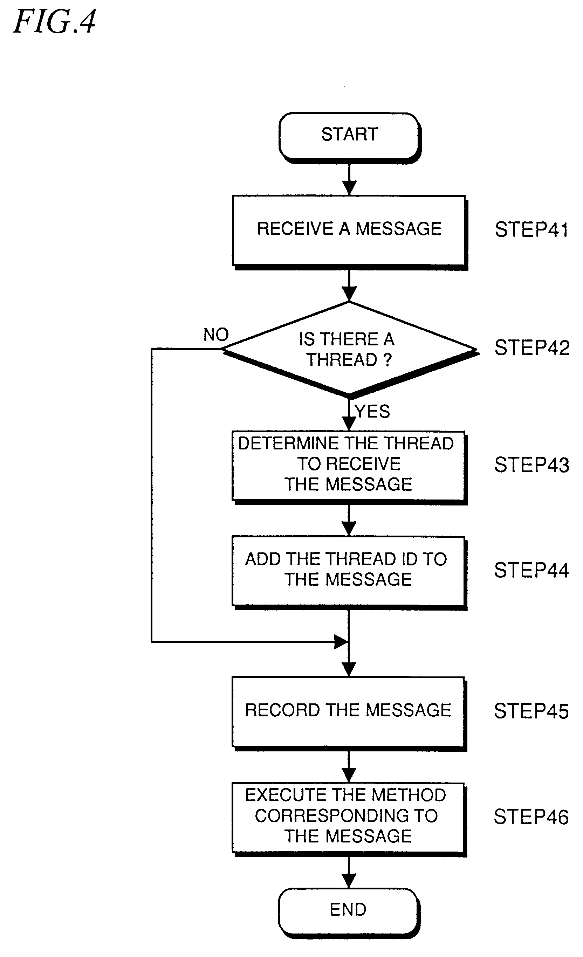

Figure 4 is a flowchart showing the procedure that is performed when a message is received. That is, in the object game, the sending/receiving means 3 passes a received message (step 41) to the thread managing module 4 and, at the same time, a copy of the message to the first recording module 5. In an object where there is no thread (step 42), the thread managing module and the second recording module are not used, nor are associated operations required. Upon receiving the message, the thread managing module 4 determines a thread which is to receive the message (step 43), passes this message to thread 0, and then passes the thread ID (thread 0) to the first recording module 5. This ID represents the destination thread determined when the message was received.

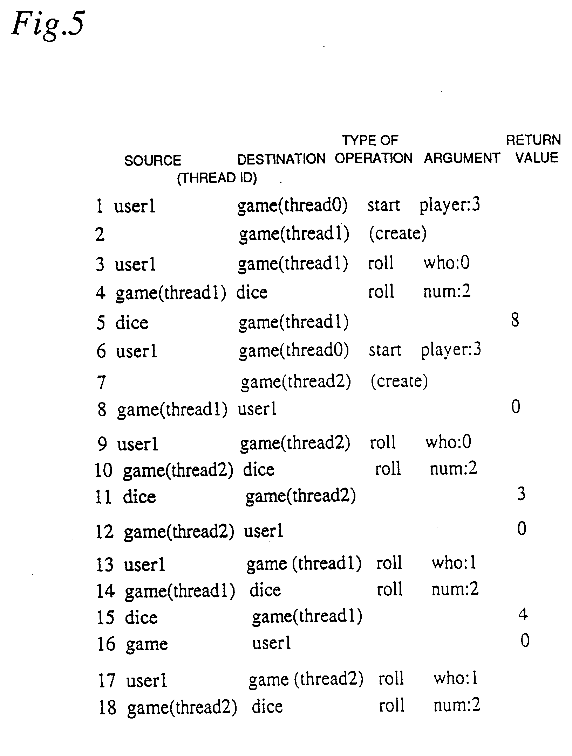

The first recording module 5 adds the thread ID to the message as follows (step 44) and, records the message as well as the added ID to the recording object 1 (step 45):
user1 game(thread0) start player:3 -
Figure 5 shows some examples of records in this embodiment.

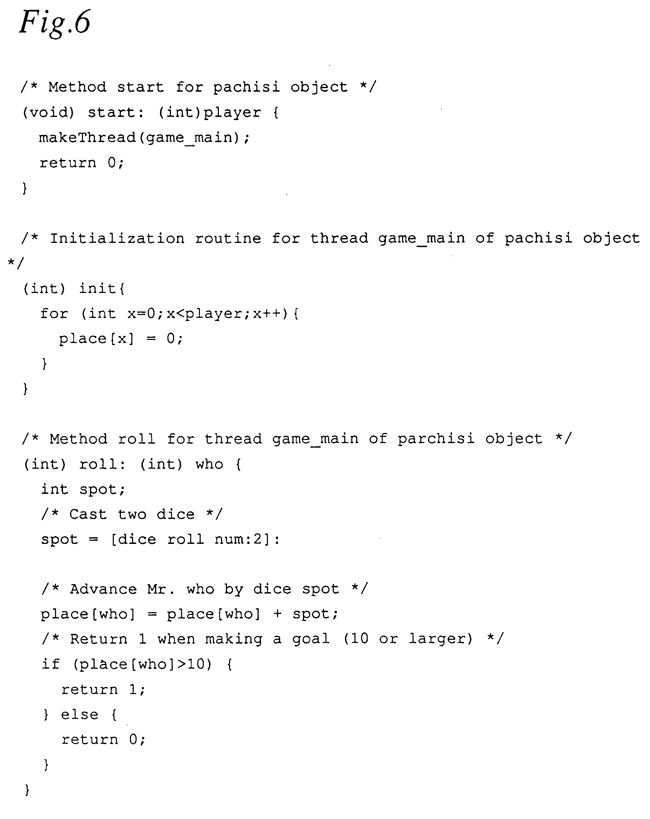

In the object game, the method "start" which corresponds to the type of operation "start" contained in the message starts (step 46), creating another thread (thread1). When this thread is created, the second recording module 6 creates the following message and sends it to the recording object 1.
- game(thread1) (create) - -
In this case, the source object field is left blank; instead, the object name and created thread ID are specified for the destination field, and the type of operation indicating the creation of a thread (create) is specified for the type of operation field. In the created thread (thread1), the initialization routine (init) is executed. Figure 6 is an example of class showing the methods of the object game.

The thread managing module 4 memorizes the fact that the created thread1 corresponds to user1, and this memorized data is used for subsequent message transfers.

Next, user1 sends the following message to the object game:
user1 game roll who:0 -
The type of operation "roll" contained in this message indicates an instruction to make a move, and the argument "who:0" indicates that player 0 out of three players (identified by numbers 0, 1, and 2, respectively) makes a move.

When the object game receives this message, the thread managing module 4 passes the message to thread1 corresponding to user1, and the first recording module 5 sends the name of the source object as well as the thread ID "thread1" to the recording object 1. In this embodiment, a message is recorded when received as described above. This makes it possible to record the ID of the destination thread, determined by the destination object, as well as a message even if there are a plurality of threads in the destination object and a destination thread is not identified when the message is sent.

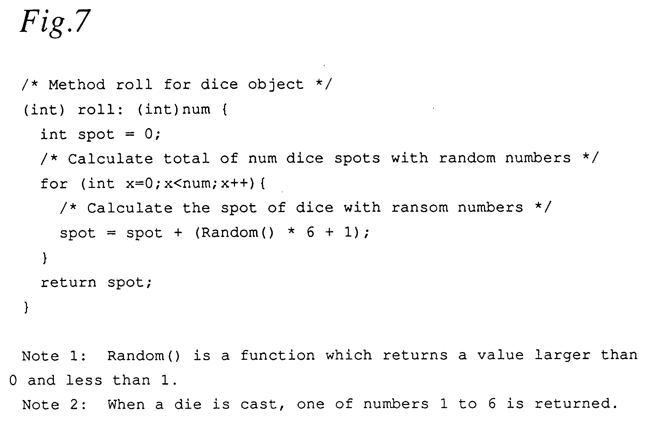

The thread thread1 in the object game executes the method roll specified by "roll" in the type of operation field of the message. It sends the following message to the object dice to determine the spot (number) on the dice.
game dice roll num:2
In this case, the first recording module 5 adds the thread ID (thread1) to the message sent from the sending/receiving means 3 as follows:
game(thread1) dice roll num:2 -
In the destination object dice, the first recording module 5 sends this message copy to the recording object 1, and the corresponding method is executed. Figure 7 is an example of methods contained in the object dice.

The game is played while messages are transferred as described above, and another user interface user2 may start the game any time. Figure 5 shows an example of records. In Figure 5, thread2 indicates a thread created for user2.

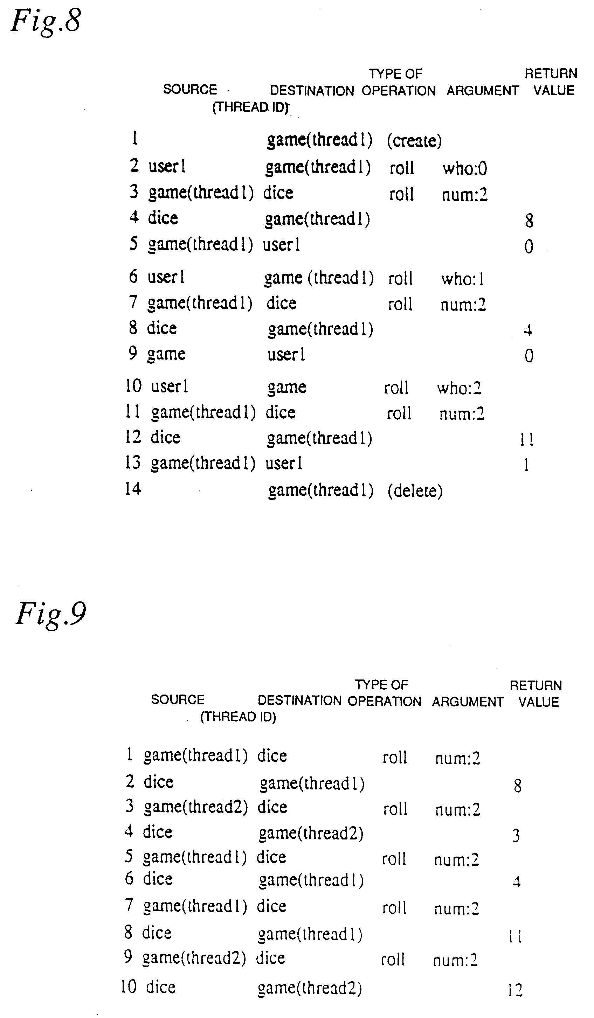

Figure 8 shows the records when the messages transferred only to or from thread 1 of game are collected. Figure 9 shows the records when the messages transferred only to or from dice are collected.

When an object uses threads to send or receive messages, this embodiment records information not only on the object but also on the threads, allowing a program to be debugged efficiently on a thread basis.

Because the first recording means is contained in an object which is part of a program to be debugged, this embodiment allows the program to be debugged and the first recording means to share a common structure, making the configuration simpler.

Note that, depending upon how the class is described, the object of the first recording means may be created as an entity separate from the object to be debugged or may be a member object of the object to be debugged. This enables the first recording means to be implemented flexibly according to a specific condition.

The first recording module 5, contained in each object in a program to be debugged, determines the contents to be recorded, sends the determined contents to the recording object 1, and stores them there. This allows information on messages to be collected in one location for easy reference. At the same time, no special memory area is needed in a program object to record messages, ensuring memory utilization.

In this embodiment, information on a source object or a thread as well as a message are sent to the destination, and are recorded with information on a thread determined by the destination. So, the message is recorded only once, making the configuration of a programming support system and a message simpler.

This embodiment contains the setting means object 2 to allow a message recording condition to be changed freely. For example, information only on a desired object or thread or on a specified type of message may be recorded. This allows a program developer to debug only a desired portion of a program.

This embodiment also records the creation and termination of threads in an object. So, a program developer can debug a program more efficiently because he knows when messages and threads were created and terminated.

This embodiment contains the setting means object to allow a message recording condition to be changed freely. For example, information on the creation and termination of only a desired object or thread may be recorded or information on only creation or termination may be recorded. This allows a program developer to debug only a desired portion of a program.

### (3) Other embodiments

This invention is not restricted to the preferred embodiment described herein, but may be embodied in other specific forms, such as those described below, without departing from the spirit or essential characteristics thereof. For example, there is no limit on the number of objects constituting a program to be developed, nor is there a limit on the number of objects which have threads or on the number of threads in those objects. In addition, the first recording means or second recording means need not always be in an object; for example, it may be implemented as one of system supervisor functions such as an object manager.

There is no limit on the number of recording objects. For example, in the above embodiment, the message recording object and the thread creation/termination recording object may be two separate entities. In addition, the format of an ID which identifies an object or thread is not fixed; for example, a character string or a code number is acceptable.

The recording means may record a source object and/or thread when it is sent, and may record a destination object or thread when it is received (claims 5, 13). This configuration records information on the source object and/or thread when it is sent, eliminates the need to send information on the source thread with the message if it is not necessary at the destination and thus making the configuration of the message simpler.

### INDUSTRIAL APPLICABILITY

As detailed above, this invention records messages as well as information on threads in the object-oriented programming environment. Therefore, debugging may be performed efficiently on a thread basis.

While a preferred embodiment has been described, variations thereto will occur to those skilled in the art within the scope of the present inventive concepts which are delineated by the following claims.

## Claims

1. A programming support system for supporting the development of an object-oriented program containing one or more objects in which messages are transferred and each of which may have one or more threads, the said programming support system comprising:
a first recording means for recording each message and information on the objects associated with message transfer and, if there is a thread in at least one of the objects associated with message transfer, information on the thread.

2. A programming support system as claimed in claim 1, wherein said first recording means is an object or a part of an object.

3. A programming support system as claimed in claim 2, wherein said first recording means comprising:
a recording module for determining the contents to be recorded; and
a recording object for sequentially storing the determined contents,
said recording module, provided for each of one or more objects contained in said object-oriented program, sequentially sending said determined contents to said recording object.

4. A programming support system as claimed in claim 1, wherein, at a message source, said first recording means sends information on both or one of a source object and a thread with a message to a destination and, at a message destination, records information on both or one of the source object and the thread sent with the message and information on both or one of a destination object or a thread with the message.

5. A programming support system as claimed in claim 1, wherein said first recording means records information on both or one of a source object and a thread when it is sent and information on both or one of a destination object and a thread when it is received.

6. A programming support system as claimed in claim 1, further comprising a first setting means for setting message recording conditions.

7. A programming support system as claimed in claim 1, further comprising a second recording means for recording a creation and a termination of a thread in an object.

8. A programming support system as claimed in claim 7, further comprising a second setting means for setting thread creation and termination conditions.

9. A programming support method for supporting the development of an object-oriented program containing one or more objects in which messages are transferred and each of which may have one or ore threads, the said programming support method comprising:
a first recording step for recording each message and information on the objects associated with message transfer and, if there is a thread in at least one of the objects associated with message transfer, information on the thread.

10. A programming support method as claimed in claim 9, wherein said first recording step uses an object or a part of an object.

11. A programming support method as claimed in claim 10, wherein said first recording step using:
a recording module for determining the contents to be recorded; and
a recording object for sequentially storing the determined contents,
said recording module, provided for each of one or more objects contained in said object-oriented program, sequentially sending said determined contents to said recording object.

12. A programming support method as claimed in claim 9, wherein, at a message source, said first recording step sends information on both or one of a source object and a thread with a message to a destination and, at a message destination, records information on both or one of the source object and the thread sent with the message and information on both or one of a destination object or a thread with the message.

13. A programming support method as claimed in claim 9, wherein said first recording step records information on both or one of a source object and a thread when it is sent and information on both or one of a destination object and a thread when it is received.

14. A programming support method as claimed in claim 9, further comprising a first setting step for setting message recording conditions.

15. A programming support method as claimed in claim 9, further comprising a second recording step for recording a creation and termination of a thread in an object.

16. A programming support method as claimed in claim 15, further comprising a second setting step for setting thread creation and termination recording conditions.

17. A medium on which a program is recorded and the program expresses:
a programming support method for supporting the development of an object-oriented program containing one or more objects in which messages are transferred and each of which may have one or more threads, the said programming support method comprising:
a first recording step for recording each message and information on the objects associated with message transfer and, if there is a thread in at least one of the objects associated with message transfer, information on the thread.

18. A medium as claimed in claim 17, wherein said first recording step comprising:
a recording module for determining the contents to be recorded; and
a recording object for sequentially storing the determined contents,
said recording module, provided for each of one or more objects contained in said object-oriented program, sequentially sending said determined contents to said recording object.
